# EUROPEAN PATENT SPECIFICATION

(11) **EP 1 828 036 B1**
(45) Date of publication and mention of the grant of the patent: **14.05.2008**
(21) Application number: 05811193.1
(22) Date of filing: 15.11.2005
(51) Int. Cl.: B65G 49/06, B66C 1/02

(54) **APPARATUS FOR HANDLING LOADS**
VORRICHTUNG ZUR HANDHABUNG VON LASTEN
DISPOSITIF DE MANIPULATION DE CHARGES

(30) Priority: 03.12.2004 IT VI20040277
(43) Date of publication of application: 05.09.2007
(73) Proprietor: MAEMA S.r.l., 37069 Villafranca di Verona VR (IT)
(72) Inventor: MAEMA S.r.l., 37069 Villafranca di Verona VR (IT)
(74) Representative: Vannini, Mario
(86) International application number: PCT/IB2005/003404
(87) International publication number: WO 2006/059192

(56) References cited:
- DE-A1- 4 203 151
- DE-U1- 9 313 464
- US-A- 3 104 016
- US-A- 5 088 610
- US-A- 5 094 495
- US-A- 5 895 198

## Description

### Field of the invention

The present invention is generally applicable to the field of load lifting and carrying apparatus and particularly relates to a load handling apparatus in accordance with the preamble of claim 1.

### Background of the invention

Many apparatus are known in the art for supporting and handling plates of glass, marble or other materials. These apparatus allow to pick up one plate at a time from a first storage or processing position and to set it down into a second position with a desired inclination, typically a horizontal or vertical inclination. Such apparatus may be mounted to a handler for full automatic handling of each plate, or may be mounted to jib or overhead cranes and be handled in a manual or semiautomatic manner.

More in detail, EP-A-1201612, US-A-5256030 and US-A-5632595 respectively disclose apparatus comprising a main frame, a plurality of suction cups on the frame, adapted to be selectively attached to a plate, a motor-driven joint for connecting the main frame to a machine or a handler and for automatically handling each plate.

A drawback of these solutions lies in their considerable complexity, which makes them only suitable for high output production.

Furthermore, the motor-driven joint is placed at a predetermined distance from the plane of the plate. This position, when combined with the typically large mass of handled plates and of the apparatus itself, requires high torques to be applied by motors, wherefore the latter have to be adequately sized.

A further drawback of these solutions is that they can only be actuated by remote electronic control. While this may be appropriate for repetitive operations, such as handling of plates between two fixed processing stations, it can hinder particular operations.

GB-A-156919 and GB-A-207177 respectively disclose plate handling apparatus, comprising a frame having one or more suction cups adapted to be attached to a plate to lift and handle it. Each apparatus further includes a rigid member which is connected to the main frame by means of one or more hinges and designed to be attached to a support rope or chain. The rigid attachment member, which is hinged to the main frame, allows an operator to rotate a plate by hand along a horizontal axis once the latter has been secured to the suction cups and lifted.

An apparent drawback of these solutions lies in that the axis of rotation of the hinge between the main axis and the rigid support member must be at a predetermined distance from the plate surface. Thus the main frame, which is hinged to the rigid attachment member, only has one stable equilibrium position, which is defined by vertical alignment of the axis of rotation and the center of gravity of the assembly of the plate and main frame. For the plate to be held in a position other than the equilibrium position, an appropriate torque has to be applied by an operator. Furthermore, as the plate and the main frame are rotated, a higher torque is required to also overcome a gravitational component of the torque, in addition to inertial and frictional components. This is particularly heavy when the plate has to be manually rotated by an operator.

GB-A-2172199 discloses an apparatus similar to the above. In this case, the main frame has two circular arc-shaped guides including a pin, which is made of one piece with the rigid attachment member and has a roller to facilitate rolling within the corresponding circular arc-shaped guide. In this case, the connection between the main frame and the attachment member allows a combined rotational and translational motion to occur therebetween. When an operator imparts a rotary motion to the assembly of the plate and the main frame, the rollers roll in their respective guides, thereby causing the assembly to simultaneously perform a translational motion.

An apparent drawback of this solution is that undesired dangerous oscillations may be introduced in the motion of the plate. This is caused by the fact that the rotation of the plate and frame assembly causes a non-equilibrium state to occur between the support action exerted by the attachment member, always directed orthogonally to the local tangent of the guide, and the weight, which is itself directed vertically. This non-equilibrium state causes in turn each roller to roll in the guide until it reaches a new equilibrium position. This repeated passage between two equilibrium positions, separated by a non-equilibrium position, may cause the plate and frame assembly to oscillate, especially in case of relatively abrupt rotations. Such oscillation may be further enhanced by the unavoidable friction between the pins and the guides.

Manual plate handling is known to be facilitated by many handling apparatus similar to those described above, which further include a handlebar rigidly connected to the main frame by means of a lever element. This solution has the apparent drawback that the lever element shall have a small length to prevent the handlebar from having an excessive vertical traverse. If the handlebar is too high or too low from the ground, it may be difficult to grasp by the operator. On the other hand, a small length of the lever element requires a larger force to be exerted by the operator and a smaller distance to be provided between the latter and the plate, thereby affecting safety.

It is further known that certain plate handling apparatus as described above include a device which can detect a reduction of the suction pressure in the suction cups. These devices may be also electrically, battery-operated, and require periodic battery replacement. When the battery status is low, the handling apparatus is still used but the warning device does not operate properly, thereby increasing the risks of injury.

As an alternative, other warning devices beep as soon as limit suction cup adhesion conditions are reached, and may be supplied with the same suction pressure air which is used to control the suction cups. An apparent drawback of this solution is that plate handling apparatus are often used in very noisy industrial environments, wherefore the danger warning beep may not be heard, and their effectiveness is wholly nullified.

An additional drawback of this solution is that the detection of a limit suction cup adhesion state is often not sufficient to prevent detachment of the load. After hearing the beep, the operator may not have enough time to effectively take actions therefor.

DE 42 03 151 and US 5 895 198 on which is based the preamble of claim 1, disclose an apparatus including a support structure, suspension means for suspending the support structure to external transfer means and guide means between the suspension means and the support structure, so adapted to allow rotation of the load about a substantially horizontal axis, wherein the guide means are formed by one arc-shaped element to rotate the load through a rotation angle of less than 360°.

A drawback of this known apparatus is that the extension of the rotation angle of the load cannot be increased without excessively increasing the angular extension of the arc-shaped element.

### Summary of the Invention

A primary object of this invention is to obviate the above drawbacks, by providing an apparatus for handling loads of any shape and material, such as blocks, plates and other products.

A further object is to provide an apparatus that may easily used by an operator, even by hand.

A particular object is to provide an apparatus that can provide high safety during use.

Another object of the invention is to provide an apparatus that has ergonomic features and allows operators to maintain comfortable positions during use.

Yet another particular object is to provide an apparatus that reduces overload risks, by effectively warning operators.

These objects, as well as other objects that will be more apparent hereafter, are fulfilled by a load handling apparatus according to claim 1.

This particular arrangement allows easy handling of the load, while reducing physical effort requirements in case of manual handling and power use in case of automatic handling.

### Brief description of the drawings

Further features and advantages of the invention will be more apparent from the detailed description of a few preferred, non-exclusive embodiments of an apparatus according to the invention, which are described by way of non-limiting examples with the help of the annexed drawings, in which:
FIG. 1 is a perspective view of a first embodiment of an apparatus according to the invention;

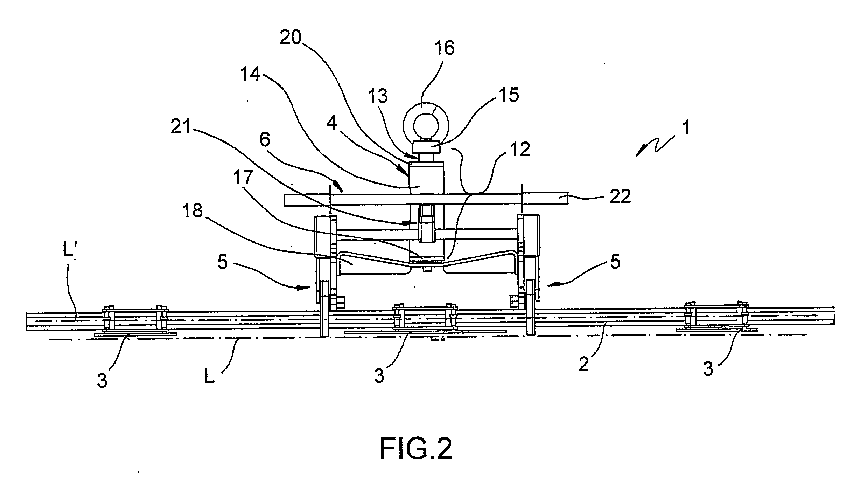

FIG. 2 is a broken away side view of the apparatus of FIG. 1;

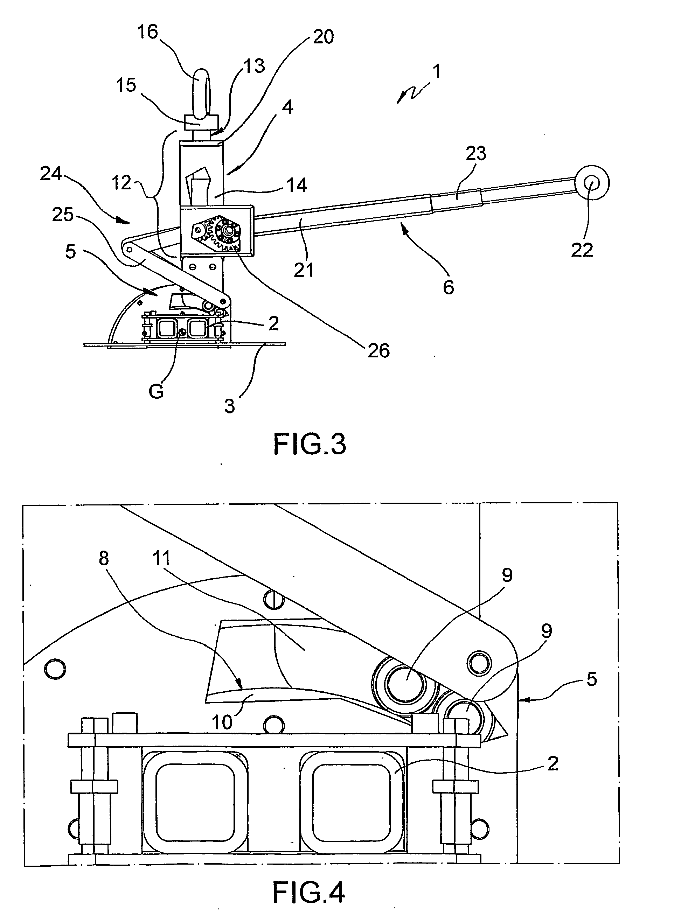

FIG. 3 is a second side view of the apparatus of FIG. 1;
FIG. 4 is an enlarged view of a detail of FIG. 3;
TIG. 5 is an enlarged view of a detail of FIG. 1;
FIG. 6 is an enlarged view of a further detail of FIG. 1;
FIG. 7 and FIG. 8 are side views of a second non-claimed embodiment of an apparatus of the invention, in two different configurations;
FIG. 9 is a view of an apparatus according to the claimed invention;
FIG. 10 is a further view of the embodiment of FIG. 9.

### Detailed description of a preferred embodiment

Particularly referring to the above figures, an apparatus according to the invention is described, which is generally designated with numeral 1, for handling loads, particularly of stone, glass, metal, wood, plastic or other materials. Each load C may have various sizes, and may be a plate, a block or another manufactured product.

The apparatus 2 comprises a support structure 2 having gripper means 3 for picking up and removably retaining a load C to be handled and means 4 for suspending the support structure 2 from and securing it to external transfer means (not shown). These may be, for example, an overhead crane, a hoist, a jib crane or a robot with a rope, a chain or other rigid and/or flexible attachment means, whereto the suspension means 4 may be removably connected. The gripper means 2 may be of various types, such as suction cups, magnets, hydraulic or pneumatic clamps.

Guide means 5 are also provided between the suspension means 4 and the support structure 2 to allow rotation of the load about a substantially horizontal axis L, which may be fixed or movable with respect to the support structure 2. Furthermore, to promote rotation of the load C about the axis of rotation L and allow handling thereof, the apparatus 1 further comprises suitable driving means 6 adapted to apply a force to the load C. The driving means 6 may be designed for manual use by an operator or for automatic or semi-automatic use using a remote control.

A peculiar aspect of the invention lies in that the guide means 5 are adapted to allow the assembly 7 formed by the load C and the support structure 2 to rotate about an axis of rotation L which is located at a minimum predetermined distance from the center of gravity G of the assembly 7. This will minimize the force to be applied to the driving means 6 to promote rotation of the load C about the center of gravity G. The guide means 5 may be dimensioned as a function of the particular application and/or the size of the load C.

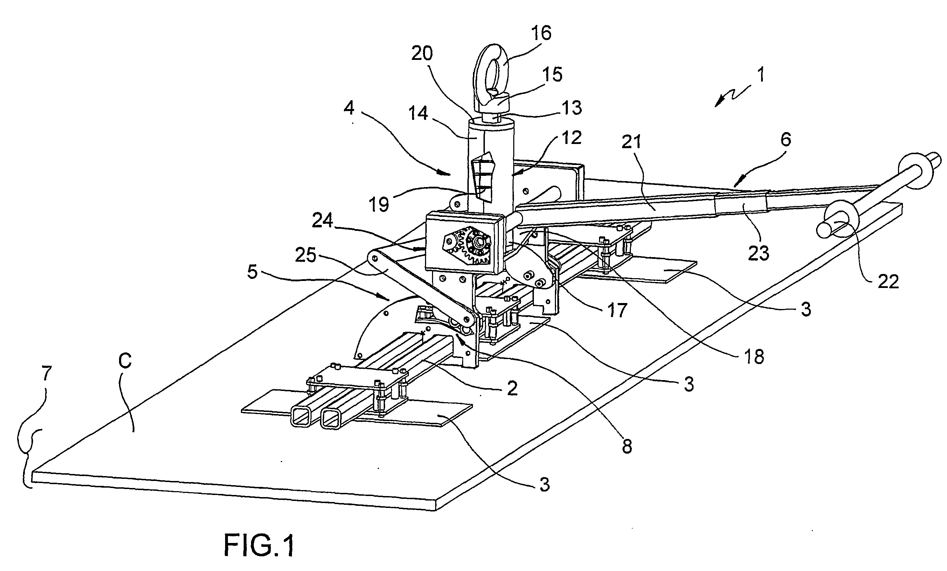

More in detail, if the load C has a plate-like structure, as shown in FIG. 1, the minimum predetermined distance between the center of gravity G of the assembly 7 and the axis of rotation L may be comprised from 0 to 200 mm and is preferably less than about 20 mm, regardless of the angular position of the assembly 7 relative to the suspension means 4. As is shown, the axis of rotation L may also be located inside the load C.

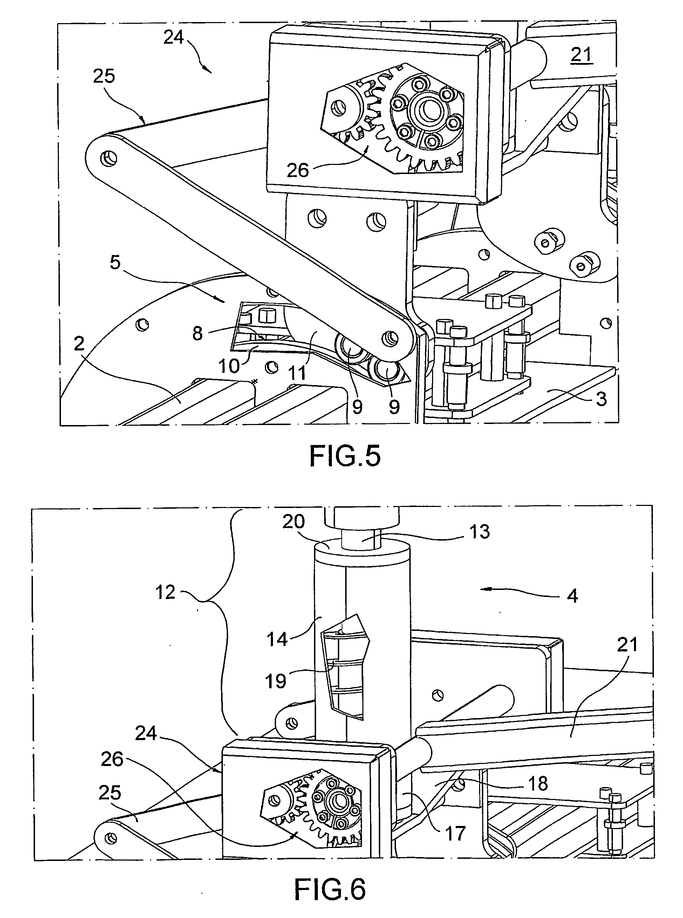

As shown in the annexed drawings, in a non-claimed embodiment the guide means 5 may further include at least one circular arc-shaped element 8, which is unitary or made of one piece with the support structure 2 and at least one roller 9 having a pin made of one piece with the suspension means 4. Each roller 9 and the corresponding circular arc-shaped element 8 may be so dimensioned that the roller 9 is able to roll along the circular arc-shaped element 8. This element may be a blind or through groove 11 formed on a corresponding plate 10, made of one piece with the support structure 2, as shown in FIG. 5. Alternatively, in non-claimed other embodiments, which are not shown herein, the circular arc-shaped element 8 may be a relief formed on a plate unitary with the support structure, which defines an abutment surface for at least one corresponding roller 9.

In certain non-claimed embodiments, not shown and differing from those described hereinbefore, each circular arc-shaped element may be unitary or made of one piece with the suspension means 4 and each corresponding roller may have a pin made of one piece with the support structure 2.

In order that the load may have one degree of rotational freedom only, the guide means 5 may include at least one pair of adjacent rollers 9 disposed along the circular arc 8 and angularly offset from each other by a predetermined angle. Thanks to this feature, the distance between the axis of rotation L of the load C and the center of gravity of the assembly 7 is substantially constant through any angular position of the load C, thereby affording regular and safe handling of the load C.

The arc-shaped element 8 may have such an angular extension as to allow the assembly 7 to rotate through a predetermined angle from 0 to substantially 360°. Such predetermined angle may have various values, depending on the types of applications and loads C. Particularly, the circular arc-shaped element 8 may extend through an angle substantially corresponding to a right angle increased by the offset angle between the rollers 9, so that the load C may be rotated by at least 90°.

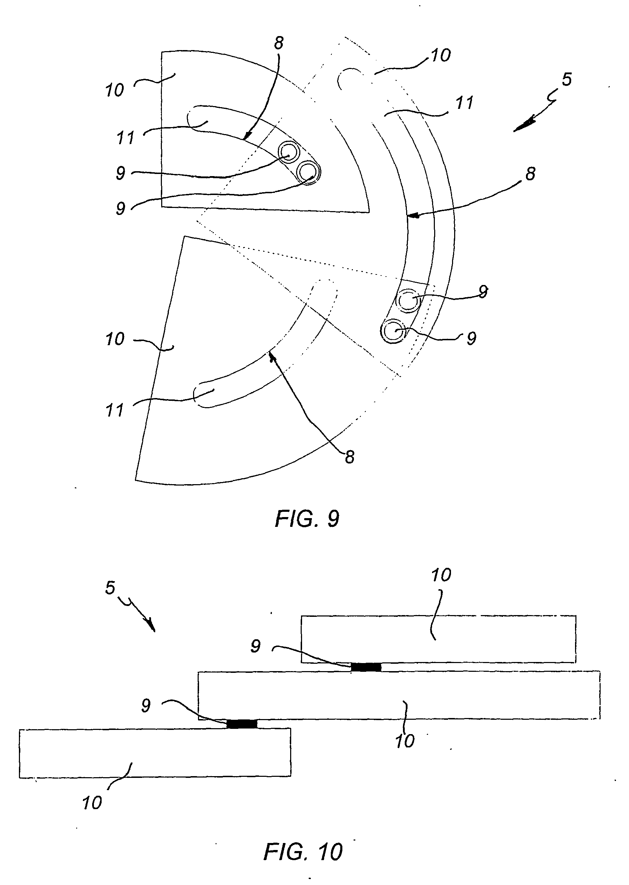

According to the invention, as shown in FIG. 9 and FIG. 10, the guide means may include a plurality of telescopically coupled arc-shaped elements 8. This allows to increase the rotation angle of the assembly 7 to the maximum value of 360°, without excessively increasing the angular extension of the individual circular arc-shaped elements 8.

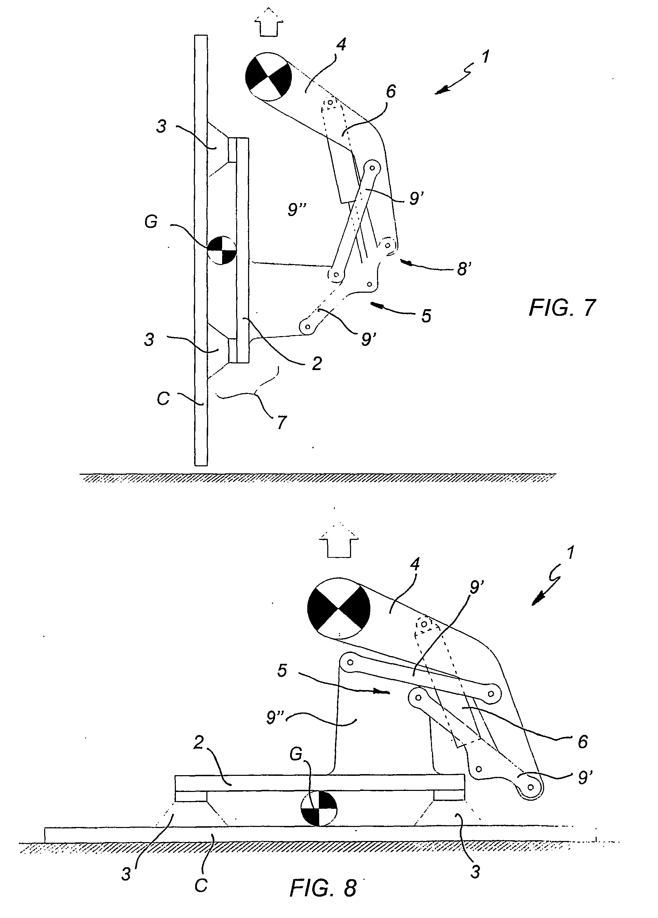

In other non-claimed embodiments, that are shown by way of example in FIG. 7 and FIG. 8, the guide means 5 may include at least one four-bar linkage 8', having a pair of rockers 9'. Each rocker 9' may have one end hinged to the suspension means 4 and the other end hinged to the support structure 2 or to an extension 9" thereof. The hinge points and the lengths of rockers 9' may be selected so that the distance between the axis of rotation L and the center of gravity G of the assembly 7 meets the above minimum predetermined distance requirements.

As shown in the drawings, the support structure 2 may extend along a longitudinal axis L' substantially parallel to the axis of rotation L to provide a better grip of the load C. In this case, the support structure 2 may include at least a plurality of longitudinally offset guide means 5 to optimize the grip and handling of loads, even when the latter have a relatively large size.

The suspension means 4 may include a telescopic element 12 having a substantially vertical telescopic direction during use. More in detail, the telescopic element 12 may have a stem 13, which is slideably received in a cylinder 14. The stem 13 may have an upper end 15 with a hook 16 for connection to the external handling means, whereas the cylinder 14 may have a lower end 17 attached to a frame 18 of the suspension means 4. Therefore, the frame 18 may be held by the cylinder 14 during use, and may be integral with the pins of the rollers 9 of the guide means 5, to also vertically hold the support structure 2.

The load C and the weight of the support structure 2 itself exert their action on the cylinder 14, and move it away from the stem 13. To compensate for this action, the telescopic element 12 may comprise an elastic member 19 between the stem 13 and the cylinder 14 so as to return the support structure 2 upwards. Thanks to its elastic hysteresis, the elastic member 19 allows to attenuate any impulsive or oscillatory stresses which might be transferred from the external handling means to the stem 13. Thanks to this arrangement, the attenuating action may be exerted during handling of the load C, whether it is a rotational, a translational or combined motion, and is effective both as the load C is lifted and as it is set down.

Furthermore, the stem 13 may have indicator means (not shown) at the upper end 15, which project out of the upper edge 20 of the cylinder 14 when certain loads are applied to the elastic member 19. Particularly, the indicator means may include a set of differentiated rings which are visible by an external operator as a function of the amount of the load C and to indicate any overload of the support structure 2. Thanks to this particular arrangement, the operator may be clearly and readily warned and the overall safety of the system will be increased. Furthermore, the visibility of the set of rings can solely depend on the mechanical properties of the elastic member 19, whereby no power supply or other supply is required for proper operation. As an alternative to the set of rings, other indicators may be used, such as a graduated scale, a color scale, symbols and pictograms.

As shown in FIG. 1, the driving means 6 may comprise a lever element 21 with an end handlebar 22 to be grasped by an operator. The lever element 21 may further have an adjustable length portion 23, allowing to adjust the distance between the operator and the support structure 2 as a function of the size of the load C, to improve the safety conditions or change the effort required by the operator. More in detail, the adjustable portion 23 may be of the telescopic type, as shown in the annexed figures, or of the pantograph type (not shown), or of other types.

The driving means 6 may further include a transmission mechanism 24, which is adapted to turn a rotation of the lever element 21 into a rotation of the load C with a predetermined transmission ratio, which may be of 1 or advantageously of more than 1. In the latter case, the angular travel of the lever element 21 may be reduced, thereby affording advantages in terms of safety. A reduced angular travel of the lever element 21 with respect to the horizontal limits the vertical traverse of the end handlebar 22 and increases the length of the adjustable portion 23, thereby allowing the operator to handle the load C from a longer distance and with a lower effort. The transmission mechanism 24 may include a linkage 25 and a gear train 26 or belt means (not shown). In certain embodiments (not shown), the driving means 6 may further include linear oil hydraulic or pneumatic actuators, to allow remote handling of the load C.

The above disclosure clearly shows that the apparatus of the invention fulfills the proposed objects and particularly allows handling, even by hand, of loads of different size and weight in an easy, safe and convenient manner.

The apparatus of this invention is susceptible to a number of changes and variants, all falling within the scope defined by the appended claims. All the details thereof may be replaced by other technically equivalent parts, and the materials may vary depending on different needs, without departure from the scope of the invention.

While the apparatus has been described with particular reference to the accompanying figures, the numerals referred to in the disclosure and claims are only used for the sake of a better intelligibility of the invention and shall not be intended to limit the claimed scope in any manner.

## Claims

1. An apparatus for handling loads, comprising:
- a support structure (2) having gripper means (3) for picking up and removably retaining a load (C) to be handled, said support structure being adapted to form in conjunction with the load (C) a unitary assembly (7) with a center of gravity (G);
- means (4) for suspending said support structure (2) from and securing it to external transfer means;
- guide means (5) between said suspension means (4) and said support structure (2) to allow rotation of the load (C) about a substantially horizontal axis (L);
- driving means (6) for applying a force to said load (C) to cause rotation thereof about said axis (L) and allow the load (C) to be handled;
- said guide means (5) comprising at least one circular arc-shaped element (8) adapted to rotate said assembly (7) about an axis of rotation (L), said axis of rotation (L) being adapted to be located at a minimum distance from the center of gravity (G) of said assembly (7) to minimize the force to be applied to said driving means (6) to cause the rotation of the load (C) about said center of gravity (G);
**characterized in that** said guide means (5) include a plurality of telescopically coupled arc-shaped elements (8) to reach a maximum angle of rotation that is comprised from 0° to substantially 360°.

2. Apparatus as claimed in claim 1, **characterized in that** said guide means further comprise at least one pair of adjacent rollers (9) disposed along said circular arc-shaped elements (8) and angularly offset from each other to allow the load (C) to have one rotational degree of freedom only.

3. An apparatus as claimed in claim 1, **characterized in that** said support structure (2) extends along a longitudinal axis (L') substantially parallel to said axis of rotation (L), there being provided a plurality of said guide means (5), in longitudinally offset positions.

4. An apparatus as claimed in claim 1, **characterized in that** said suspension means (4) include a telescopic element (12) having a substantially vertical telescopic direction during use.

5. An apparatus as claimed in claim 4, **characterized in that** said telescopic element (12) comprises a stem (13) having an upper end (15) with a hook (16) for connection to said external handling means, which is slideably received in a cylinder (14) having a lower end (17) connected to said guide means (5).

6. An apparatus as claimed in claim 5, **characterized in that** said telescopic element (12) comprises an elastic member (19), interposed between said stem (13) and said cylinder (14), to return said support structure (2) upwards.

7. An apparatus as claimed in claim 6, **characterized in that** said stem (13) has indicator means at the upper end (13), which project out of the upper edge (20) of said cylinder (14) when certain loads are applied to the elastic member (19).

8. An apparatus as claimed in claim 7, **characterized in that** said indicator means include a set of differentiated rings which are visible by an external operator as a function of the amount of the load (C) being applied and to indicate any overload of the support structure (2).

9. An apparatus as claimed in claim 1, **characterized in that** said driving means (6) comprise a lever element (21) with an end handlebar (22) to be grasped by an operator.

10. An apparatus as claimed in claim 9, **characterized in that** said lever element (21) has an adjustable length portion (23), allowing to adjust the distance between the operator and the support structure (2) as a function of the size of the load (C), to improve safety conditions.

11. An apparatus as claimed in claim 10, **characterized in that** said adjustable portion (23) is of the telescopic type.

12. An apparatus as claimed in claim 10, **characterized in that** said adjustable portion (23) is of the pantograph type.

13. An apparatus as claimed in claim 1, **characterized in that** said driving means (6) comprise a transmission mechanism (24), which is adapted to turn a rotation of said lever element (21) into a rotation of the load (C) with a predetermined transmission ratio.

14. An apparatus as claimed in claim 13, **characterized in that** said transmission ratio is of 1 or more than 1, to reduce the angular travel of the lever element (21).

## Patentansprüche

1. Vorrichtung zur Handhabung von Lasten mit
einer Tragstruktur (2) mit Greifeinrichtungen (3) zur Aufnahme und zum lösbaren Halten einer zu handhabenden Last (C), wobei die Tragstruktur so ausgelegt ist, dass sie in Verbindung mit der Last (C) eine einheitliche Komponente (7) bildet mit einem Schwerpunkt (G),
Einrichtungen (4) zum Lösen der Tragstruktur (2) von und zu deren Befestigung an äußeren Übertragungseinrichtungen,
Führungseinrichtungen (5) zwischen den Hängeeinrichtungen (4) und der Tragstruktur (2), um Drehung der Last (C) um eine im wesentlichen horizontale Achse (L) zu ermöglichen,
Antriebseinrichtungen (6) zum Anlegen einer Kraft an die Last (C), um deren Drehung um diese Achse (L) zu veranlassen und um es zu ermöglichen, dass die Last (C) gehandhabt werden kann,
wobei die Führungseinrichtungen (5) mindestens ein kreisförmiges Element (8) in Bogenform aufweisen, das ausgelegt ist, um die Komponente (7) um eine Drehachse (L) zu drehen, wobei die Drehachse (L) so ausgelegt ist, dass sie mit einem minimalen Abstand von dem Schwerpunkt (G) der Komponente (7) angeordnet werden kann, um die Kraft zu minimieren, die angelegt werden muss an die Antriebseinrichtungen (6), um die Drehung der Last (C) um diesen Schwerpunkt (G) zu veranlassen,
**dadurch gekennzeichnet, dass**
die Führungseinrichtungen (5) eine Vielzahl von teleskopisch verbundenen, bogenförmigen Elementen (8) beinhalten, um einen maximalen Drehwinkel zu erreichen, der von 0° bis im wesentlichen 360° reicht.

2. Vorrichtung gemäß Anspruch 1, **dadurch gekennzeichnet, dass** die Führungseinrichtungen (5) weiterhin mindestens ein Paar anliegender Rollen (9) aufweisen, die entlang den kreisförmigen Elementen (8) in Bogenform und im Winkel versetzt von einander angeordnet sind, um der Last (C) nur einen Drehfreiheitsgrad zu erlauben.

3. Vorrichtung gemäß Anspruch 1, **dadurch gekennzeichnet, dass** sich die Tragstruktur (2) entlang einer longitudinalen Achse (L') erstreckt, die im wesentlichen parallel ist zu der Drehachse (L), wobei eine Vielzahl der Führungseinrichtungen (5) vorgesehen sind in longitudinal versetzten Positionen.

4. Vorrichtung gemäß Anspruch 1, **dadurch gekennzeichnet, dass** die Löseeinrichtungen (4) ein teleskopisches Element (12) umfassen, das eine im wesentlichen vertikale teleskopische Richtung aufweist während des Betriebs.

5. Vorrichtung gemäß Anspruch 4, **dadurch gekennzeichnet, dass** das teleskopische Element (12) einen Bolzen (13) umfasst mit einem oberen Ende (15) mit einem Haken (16) zur Verbindung mit den äußeren Handhabungseinrichtungen, der gleitend aufgenommen ist in einem Zylinder (14) mit einem unteren Ende (17), das verbunden ist mit den Führungseinrichtungen (5).

6. Vorrichtung gemäß Anspruch 5, **dadurch gekennzeichnet, dass** das teleskopische Element (12) ein elastisches Element (19) umfasst, das zwischen dem Bolzen (13) und dem Zylinder (14) angeordnet ist, um die Tragstruktur (2) wieder nach oben zu bringen.

7. Vorrichtung gemäß Anspruch 6, **dadurch gekennzeichnet, dass** die Welle (13) mit Anzeigeeinrichtungen an dem oberen Ende (13) versehen ist, die über den oberen Rand (20) des Zylinders (14) hinausragen, wenn dem elastischen Element (19) bestimmte Lasten aufgeprägt werden.

8. Vorrichtung gemäß Anspruch 7, **dadurch gekennzeichnet, dass** die Anzeigeeinrichtungen mit einem Satz differenzierter Ringe versehen sind, die sichtbar sind für einen äußeren Nutzer als eine Funktion des Betrags der Last (C), die angelegt ist und um jede Überlast der Tragstruktur (2) anzuzeigen.

9. Vorrichtung gemäß Anspruch 1, **dadurch gekennzeichnet, dass** die Antriebseinrichtungen (6) ein Hebelelement (21) umfassen mit einem Griff (22) an einem Ende zum erfassen durch einen Nutzer.

10. Vorrichtung gemäß Anspruch 9, **dadurch gekennzeichnet, dass** das Hebelelement (21) einen einstellbaren Längenabschnitt (23) aufweist, der es ermöglicht, den Abstand zwischen dem Nutzer und der Tragstruktur (2) als eine Funktion der Größe der Last (C) einzustellen zur Verbesserung der Sicherheitsverhältnisse.

11. Vorrichtung gemäß Anspruch 10, **dadurch gekennzeichnet, dass** der einstellbare Abschnitt (23) von teleskopischer Art ist.

12. Vorrichtung gemäß Anspruch 10, **dadurch gekennzeichnet, dass** der einstellbare Abschnitt (23) von pantographischer Art ist.

13. Vorrichtung gemäß Anspruch 1, **dadurch gekennzeichnet, dass** die Antriebseinrichtungen (6) einen Übertragungsmechanismus (24) umfassen, der so ausgelegt ist, dass eine Drehung des Hebelelements (21) in eine Drehung der Last (C) umgeformt wird mit einem vorbestimmten Übersetzungsverhältnis.

14. Vorrichtung gemäß Anspruch 13, **dadurch gekennzeichnet, dass** das Übersetzungsverhältnis gleich 1 oder mehr als 1 ist, um die Winkelbewegung des Hebelelements (21) zu vermindern.

## Revendications

1. Dispositif de manipulation de charges comprenant :
- une structure de support (2) ayant des moyens preneurs (3) destinés à saisir et retenir de façon amovible une charge (C) à manipuler, ladite structure de support étant adaptée pour former, en combinaison avec la charge (C), un ensemble unitaire (7) possédant un centre de gravité (G) ;
- des moyens (4) destinés à suspendre ladite structure de support (2) à des moyens de transfert extérieurs et à la fixer à ces moyens;
- des moyens de guidage (5) situés entre lesdits moyens de suspension (4) et ladite structure de support (2) pour permettre la rotation de la charge (C) autour d'un axe sensiblement horizontal (L) ;
- des moyens d'entraînement (6) destinés à appliquer une force à ladite charge (C) pour provoquer une rotation de celle-ci autour dudit axe (L) et à permettre à la charge (C) d'être manipulée ;
- lesdits moyens de guidage (5) comprenant au moins un élément en forme d'arc de cercle (8) adapté pour faire tourner ledit ensemble (7) autour d'un axe de rotation (L), ledit axe de rotation (L) étant adapté pour être situé à une distance minime du centre de gravité (G) dudit ensemble (7), afin de réduire à un minimum la force qu'il faut appliquer auxdits moyens d'entraînement (6) pour provoquer la rotation de la charge (C) autour dudit centre de gravité (G) ;
**caractérisé en ce que** lesdits moyens de guidage (5) comprennent une pluralité d'éléments en forme d'arc (8) accouplés télescopiquement pour atteindre un angle de rotation maximum qui est compris entre 0° et sensiblement 360°.

2. Dispositif selon la revendication 1, **caractérisé en ce que** lesdits moyens de guidage comprennent en outre au moins une paire de rouleaux adjacents (9) disposés le long desdits éléments en forme d'arc (8) et déportés angulairement l'un par rapport à l'autre pour permettre à la charge (C) d'avoir seulement un degré de liberté en rotation.

3. Dispositif selon la revendication 1, **caractérisé en ce que** ladite structure de support (2) s'étend le long d'un axe longitudinal (L') sensiblement parallèle audit axe de rotation (L), et il est prévu une pluralité desdits moyens de guidage (5) dans des positions décalées longitudinalement.

4. Dispositif selon la revendication 1, **caractérisé en ce que** lesdits moyens de suspension (4) comprennent un élément télescopique (12) ayant une direction télescopique sensiblement verticale pendant l'utilisation.

5. Dispositif selon la revendication 4, **caractérisé en ce que** ledit élément télescopique (12) comprend une tige (13) ayant une extrémité supérieure (15) munie d'un crochet (16) pour l'assemblage auxdits moyens de manipulation extérieurs, et qui est logée à coulissement dans un cylindre (14) ayant une extrémité inférieure (17) reliée auxdits moyens de guidage (5).

6. Dispositif selon la revendication 5, **caractérisé en ce que** ledit élément télescopique (12) comprend un élément élastique (19) interposé entre ladite tige (13) et ledit cylindre (14) pour rappeler ladite structure de support (2) vers le haut.

7. Dispositif selon la revendication 6, **caractérisé en ce que** ladite tige (13) possède des moyens indicateurs situés à l'extrémité supérieure (13) qui débordent en dehors du bord supérieur (20) dudit cylindre (14) lorsque certaines charges sont appliquées à l'élément élastique (19).

8. Dispositif selon la revendication 7, **caractérisé en ce que** lesdits moyens indicateurs comprennent un jeu d'anneaux différenciés qui peuvent être vus par un opérateur extérieur en fonction de la valeur de la charge (C) qui est appliquée, et pour indiquer une éventuelle surcharge de la structure de support (2).

9. Dispositif selon la revendication 1, **caractérisé en ce que** lesdits moyens d'entraînement (6) comprennent un élément formant levier (21) possédant un guidon terminal (22) destiné à être saisi par un opérateur.

10. Dispositif selon la revendication 9, **caractérisé en ce que** ledit élément formant levier (21) possède une portion de longueur réglable (23) qui permet de régler la distance entre l'opérateur et la structure de support (2) en fonction de la dimension de la charge (C) afin d'améliorer les conditions de sécurité.

11. Dispositif selon la revendication 10, **caractérisé en ce que** ladite portion réglable (23) est du type télescopique.

12. Dispositif selon la revendication 10, **caractérisé en ce que** ladite portion réglable (23) est du type à pantographe.

13. Dispositif selon la revendication 1, **caractérisé en ce que** lesdits moyens d'entraînement (6) comprennent un mécanisme de transmission (24) qui est adapté pour transformer une rotation dudit élément formant levier (21) en une rotation de la charge (C) avec un rapport de transmission prédéterminé.

14. Dispositif selon la revendication 13, **caractérisé en ce que** ledit rapport de transmission est de 1 ou de plus de 1, pour réduire la trajectoire angulaire de l'élément formant levier (21).
